# EUROPEAN PATENT APPLICATION

(11) **EP 1 359 706 A1**
(43) Date of publication of application: **05.11.2003**
(21) Application number: 02009806.7
(22) Date of filing: 30.04.2002
(51) Int. Cl.: H04L 12/18, H04L 29/06, H04M 3/56, H04L 29/12

(54) **Communications environment comprising a telecommunications web site**

(71) Applicant: Web. De AG, 76227 Karlsruhe (DE)
(72) Inventor: Cotte, Pierre, D-92224 Amberg (DE)
(74) Representative: Schnekenbühl, Robert Matthias L.

(57) **Abstract**

The present invention relates to a communications environment, comprising: a first end user unit (EUU1) being adapted to perform network-based communications, and a web site including at least one web page, wherein the web site is a telecommunications web site (TCW) corresponding to a specific entity (SE), and the telecommunications web site (TCW) is adapted to provide, upon an access by the first end user unit (EUU1), for direct private communications between the first end user unit (EUU1) and the specific entity (SE), including a connection means (CM) for establishing a communications link from the first end user unit (EUU1) to the specific entity (SE) of the telecommunications web site (TCW).

## Description

### Field of the invention

In general, the present invention relates to communications environments for an end user unit communicating via the communications environment and related systems, devices, units and methods for communications purposes. In particular, the present invention relates to a communications environment integrating various communications systems, such as computer-based networks, the Internet, PSTN networks, UMTS networks, mobile telephone networks, radio communications systems, satellite-based communications and the like wherein all communications from and to a end user unit are executed via a general-purpose communications interface, a so-called telecommunications web site (TCW), in a direct and private manner with respect to the communicating parties.

### Background of the invention

Traditionally, in order to accomplish personalized and private communications, postal service-based communications, e.g., by letters, personally addressed to a receiving party uniquely characterized by a name and address are used. A further example, of private communications personally directed to a party are telephone network-based communications, e.g., telephone calls, facsimiles and telexes, wherein a telephone number uniquely indicate the addressee.

In view of a demand for enhanced communications, computer network-based communications, e.g., via the Internet, have partially replaced the traditional communications. Although, computer network-based communications exhibit some communications, e.g., a higher transmission rates for text and graphic data, transmissions of different data formats via a common communications link and transmissions of high data amounts and loads, some of the advantages of "writing letters" and "calling a person per telephone" have been abandoned for the sake of participating in new technology communications.

In the following, an overview of different conventional communications environments is given respectively indicating advantages and disadvantages thereof:

Conventional telephone systems (PSTN, mobile telephone networks, satellite and radio-based environments) used for voice provide for point-to-point communications links allowing virtually true and simultaneous bi-directional communications and (nearly) delay-free data transmissions. Beside the actions of communicating parties to input telephone numbers, to pick up telephone hand sets, to speak and to listen and the like. Data transmissions between respective end user units (telephones) are not possible.

Further, the addressing of a party is based on worldwide valid addresses by means of telephone numbers, which uniquely identify a party. Thus, upon dialing the right telephone number, a communications link will be established to a desired party and, as a result, communications will occur only between the calling and the called party, i.e., communications will be personalized and private. However, the established communication will not necessarily be secure.

End user units for telephone communications environments are, in particular for mobile communications environments, small, light weight and not restricted to a special location, such that communications are possible wherever intended.

Thus, telephone-based communications are an easy and fast way to communicate. On the other hand telephone-based communications have limited data transmission capabilities, e.g., limited transmissions bandwidths. Therefore, for example, transmissions of video and audio data are possible in restricted extent only and multi-medial communications links are not possible at all.

A further limitation of telephone environments is their restricted capability of event-based control of communications. In telephone environments, for example, it is possible to forward an incoming call to another telephone device in general but not selectively for specific calling parties only.

Computer-based communications environments (e.g., local area networks and the Internet) employ a plurality of hardware devices (e.g., computer systems and network modems) and, in particular, a vast number of different software applications (e.g., network browsers, e-mail applications, data conversion software and encoding and decoding software). A certain level of knowledge, understanding and experience is required by users of such communications environments specifically with respect to the use of software applications. For example, computer-based communications environments are based on complex addressing methods, which require, compared to telephone-based communications, an increased amount of user interaction and knowledge.

Further, computer-based communications environments do not provide for true bi-directional communications, i.e., communications performed simultaneously and virtually in real time. Rather, such communications are subsequently performed uni-directional data transmissions like data file exchanges, web page accesses and email-based communications.

Moreover, due to the methods employed with computer-based communications environments for actually transmitting data (e.g., asynchronous file transfer of data packets, least cost network routing strategies and utilization of different physical communications links for one communications connection), voice and video data transmissions are restricted. Further drawbacks of computer-based communications environments include security problems (e.g., data interception) and undesired data communications (e.g., "junk mail").

In computer-based communications environments, communications that can be compared with telephone-based communications in respect to personalization and privacy are based on email applications. On the other hand, email communication is, from its nature, more akin to enhanced letter writing rather than bi-directional communication, as is directly talking via telephones.

Additionally, computer-based communications environments have restricted capabilities to control communications on the basis of events. Using email applications, for example, it is only possible to forward received email messages to another party (e.g., by means of another email address) or to filter undesired email messages such that they are not actually received by the party to which they are addressed (e.g., junk mail filter).

A further example of computer-based communications are web sites and its web page(s), respectively. Web sites generally provide for uni-directional communications, in particular transmissions of data and information to end user units and its users, respectively, accessing a web site. Moreover, private communications comparable to telephone communications are not possible since web sites are accessible by anybody or accessible by a predefined group of users.

Both, telephone and computer-based communications environments are isolated from each other. Thus, separate addresses and addressing methods are employed for telephone and computer-based communications environments. As a result, communications can only be established within one environment and cannot be interconnected to another one.

### Object of the invention

In general, the object of the present invention is to overcome the disadvantages existing in known communications environments and to provide a solution incorporating, at least the main advantages offered by available communications environments. More particularly, the object of the present invention is to provide for a communications environment which allows for communications which are comparable to telephone communications in terms of privacy and ease of use and provide the data communications capabilities prevailing in any existing communications network (e.g., telephone networks, computer-based networks and the Internet).

### Short description of the invention

The above object is achieved by a communications environment, a telecommunications web site, a method, a computer program product and an end user unit according to the independent claims. Further advantageous features and embodiments are defined in the dependent claims.

[01] In particular, the object of the present invention is achieved by a communications environment comprising a first end user unit (EUU1) being adapted to perform network-based communications, and a web site including at least one web page, wherein the web site is a telecommunications web site (TCW) corresponding to a specific entity (SE), and the telecommunications web site (TCW) is adapted to provide, upon an access by the first end user unit (EUU1), for direct private communications between the first end unit and the specific entity (SE). Thus a new way of communications is disclosed where a person (SE) can be contacted via a web site providing private communications between a caller and the host of this TCW. In all Internet communication of the prior art, the parties do not communicate via a personalized web site. Even using a web site within a chat forum, this web site of the chat forum does not correspond to a specific person; rather there can be many different persons in the chat forum.

A communications environment is a communications system comprising more than one component. Thus, a communications environment or communications system might for instance comprise a telephone, a PSTN-network, a gateway to the internet, etc.

[01 - EUU] The first end user unit (EUU1) as any end user unit (EUU) is preferably a device or means, which can be used for communications. A preferred EUU is a telephone, a keyboard, a computer terminal, a mobile phone, a fax, a telex, a mail pigeon, an ordinary letter, a scanner, a PSTN device, a 3G-wireless communications device, especially a UMTS device, etc. An especially preferred EUU is another TCW, a portal comprising more than one TCW's or a device using a browser-based application.

The EUU of the present invention is not limited to a particular communications unit/ device or any communications network. Rather, communications by means of the (first) end user unit can occur via any communications network such as regular telephone networks, mobile communications networks, computer networks, radio transmission networks, the Internet, etc. Further, the first end user unit is not restricted to single devices or means, but can also include two and more units, devices, means and the like providing data/information sending and/or receiving capabilities for communications purposes, e.g., an ordinary letter and a scanner.

The end user unit EUU is adapted to perform network-based communications. Thus, the EUU is connectable to a network or rather able to communicate with a network. Thus, data information can be processed in a network. A network in this context is a physical transport medium in which data and/or signal can be fed. For example, an ordinary letter itself is adapted to perform network-based communication when scanned or digitized and supplied into a TCP/IP network.

[01 - Web site] The terms "web site" and "web page" define sites and sub-sites associated thereto which can be uniquely addressed by means of a single address, like a telephone number or an IP address, an URL, etc. It is also advantageous to use such a "web site" in a 3G-communication environment, especially an UMTS-environment. Preferably, such a web site is a site known from the Internet with a specific URL, which can be accessed by Internet visitors, and by the web site host. The web site host is the owner of the web site.

This web site can include one or more web pages. These web pages are part of the one web site. It should be noted that the terms "web site" and "web page" are not to be considered to limit the present invention to conventional web sites and WebPages known from the Internet. Thus, the web site and its web page(s), respectively, can be accessed by establishing a communications link from the first end user unit independently of the network(s) employed.

[01 - TCW] Preferably, the web site is a telecommunications web site corresponding to a first specific entity and is adapted to provide, upon an access by the first end user unit, for direct private communications between the first end user unit and the first specific entity.

[01 - assigned to one SE] Preferably, such a web site is assigned to or personalized for or corresponding to a specific person or entity. Such a first specific entity (SE) can be a person, a company or any other entity. The specific entity preferably acts as the host of the telecommunication web site TCW. Especially preferably, the specific entity (SE) is a single entity, e.g., a specific user or owner (e.g., a single person, a company, a unit of a company, etc.) of the telecommunications web site, a specific address, a specific location, a specific end user unit and the like.

[01 - direct private communication] Preferably, the communication established between the EUU1 and the SE is a direct private communication. A direct private communication is a communication in which a third party can not overhear the parties to the communication. The communication is not controlled by a third party or monitored by a person like a System Operator in a chat-forum. The communication takes place between the host of the telecommunications web site, i.e., the specific entity, and the visitor of the telecommunication web site, i.e., the person using the first end user unit. The private communication is a non-public communication.

The telecommunications web site of the present invention designates a site which is particularly adapted and provided to be used for communication, preferably personal communication, direct private communication such as a telephone conversation, e-mail exchange, fax-communication, file-exchange, etc. Especially preferred, the telecommunications web site is adapted to be used for telecommunication, i.e., real time communication between two or more users using electronic media like a telephone or the Internet.

Thus, the communication includes only the user of the EUU1 and the person behind the specific entity SE. It is within the discretion of the person behind the SE to allow third parties to take part in this communication. The user of the EUU1 may be the "caller" and the person behind the SE may be the "called party" of such a private communication. It is also possible that the person behind the SE establishes the communication to the person behind the EUU1. Such a communication will be established only between the EUU1 and the SE.

The TCW can, for instance, be accessed and controlled by the SE via a browser-based application. The SE may then receive all communication on this TCW. For example, in order to perform for direct private communications with a desired person, the respective telecommunications web site of this person is accessed by means of the first end user unit, e.g., under control of a controlling user or system. In response to the telecommunications web site access, the telecommunications web site TCW enables direct and private communications with the specific entity, here the desired person. In other words, communications by means of the telecommunications web site are personalized with respect to the "called" specific entity.

Preferably, the communication takes place on this specific and personalized telecommunications web site, i.e., this specific URL identifying the specific entity, i.e., the called party as host of the TCW. The TCW might then be used interactively, i.e. that the communication may take place between the caller and the called party like in a telephone conversation. Both, the caller and the called party then use the same adress for the interaction, i.e. the same URL. It might even be the case, that both the calling party and the called party use telephones as end user units - then the TCW works as a virtual operator connecting both the calling party and the called party.

As will become more evident below, the telecommunications web site serves as a general purpose communications interface for end user units and addressed entities which can include or can be an end user unit itself. As an illustration, the telecommunications web site can be considered as a communications "window", similar to a window of an office counter, where communicating parties are "sitting" on opposite sides of the window and can communicate through speech holes in the window, via an intercom, by gestures, by facial expressions, showing papers with information written thereon, passing documents through a hatch and so on. Comparable thereto, the telecommunications web site according to the present invention allows communications in a plurality of modes and by a plurality of types/formats of data/information.

An advantage of the TCW is that communication can be provided and established multimedial, i.e. using more than one medium. These different media can be used by using different end user units or different networks like for instance PSTN, IP-based networks or UMTS networks.

Another advantage of the TCW is the fact, that no spam-mail can be sent to a TCW. Spam-mail is sent to e-mail adresses. The access of the TCW via spam-mail programs is not possible since this address of the TCW is not an e-mail address.

[02] In a preferred embodiment of the communications environment according to the present invention the telecommunications web site (TCW) is adapted to provide for a bi-directional private communications between the first end user unit (EUU1) and the specific entity (SE). Thus, the established communication is more intercommunicative and more acceptable for persons that wish to communicate real time, i.e., where action, reaction and interaction are perceived as being instantaneous by a human being.

For communicating by means of the telecommunications web site, the first end user unit can access the telecommunications web site by providing a telecommunications web site address, comparable to a telephone number, an IP address, an Internet domain name and the like. The telecommunications web site address uniquely identifies the telecommunications web site and, thus, the specific entity corresponding thereto. Upon establishment of the direct private communications, both the first end user unit and the specific entity communicate with each other virtually in real time via the telecommunications web site. As a result, it is possible, as in a telephone call, to bidirectionally communicate. This can be accomplished by the telecommunications web site being adapted to provide for a bi-directional private communications between the first end user unit and the specific entity.

[05] According to a preferred embodiment, the communications environment comprises a second end user unit (EUU2) being associated to the specific entity (SE) and being adapted to perform network-based communications, wherein the telecommunications web site (TCW) is adapted to provide for the direct private communications as direct private communications between the first end user unit (EUU1) and the second end user unit (EUU2). Thus, the specific entity SE may use any end user unit EUU desired to communicate with the other party, i.e., with the person behind the first end user unit EUU1. Thus, the SE is not limited to a device used to access the TCW (for instance via a browser-based application) but may rather use any known communication device. Again, no limitations are imposed on the second end user unit; i.e., the second end user unit is not limited to a particular communications unit/device or any communications network. Here, the telecommunications web site is adapted to provide for the direct private communications as direct private communications between the first end unit EUU1 and the second end user unit EUU2. The utilization of the second end user unit EUU2 depends from the actually properties of the specific entity. In the case the specific entity is adapted to provide for communications comparable to an end user unit, the direct private communications can occur without any further end user unit. On the other hand, employing the second end user unit makes it possible to perform the direct private communications between the first end user unit and any type of end user unit serving as or being comprised by the second end user unit. For example, if the specific entity indicates a single person, direct private communications can take place between any communications device of this person, e.g., a personal (portable) computer, a mobile telephone, a fax machine, a telephone, UMTS devices, memory devices, etc., and the first end user unit.

Communications via the telecommunications web site are not limited to any specific type of end user unit and specific entity. In particular, telecommunications web site-based communications can originate from and can be designated to any communications unit, such as telephones, personal computers, portable computer systems, fax devices and the like. Moreover, users of telecommunications web sites do not have to perform specific interactions in dependence of used end user units. Rather, the end user units are used in a common manner. For example, in the case of the first end user unit being a telephone, address information (like a telephone number) is inputted by the calling user and a communications link is established to the called destination (here the specific entity or an associated end user unit and a user thereof, respectively). Then, interacting with the respective end user units can perform communications. In particular, called and calling users can use their end user units independently of the type of end user unit of the counterpart end user unit. As result, for example, a calling user can utilize a telephone, while the called user communicates by means of a personal computer.

[10] The object of the present invention is also achieved by a telecommunications web site (TCW), comprising at least one web page, wherein the web site is a telecommunications web site (TCW) corresponding to a specific entity (SE), and the telecommunications web site (TCW) is adapted to provide, upon an access by a first end user unit (EUU1), for direct private communications between the first end unit and the specific entity (SE).

The object of the invention is also accomplished by a method including the steps of: providing a web site including at least one web page corresponding to a specific entity (SE) and being adapted to provide direct private communications, accessing the telecommunications web site (TCW) by a first end user unit (EUU1), and providing, in response to the accessing the telecommunications web site (TCW) by the first end user unit (EUU1), direct private communications between the first end user unit (EUU1) and the specific entity (SE). With this method, the advantages of the communication between an end user unit and a TCW is accomplished.

In a preferred method according to the invention, a further step is included of providing the direct private communications as bi-directional private communications between the first end user unit (EUU1) and the specific entity (SE) by the telecommunications web site (TCW). Thus, the advantages of communicating bi-directional are accomplished.

[multimedial chain] Preferably, the communications link is a multimedial chain. Thus, it is possible to combine several communications links to one communications link. A multimedial chain is a chain of different kinds of communications links. For instance, a PSTN-end user unit 1 may be connected via the PSTN-network via a gateway to the Internet. Via the TCP/IP protocol it may reach the TCW 1 on the portal TCP 1. Then, a link from portal TCP 1 to TCP 2 is provided via an optical fiber followed by an ATM-WLL connection. On portal TCP 2, the connection is realized via the TCP/IP protocol and to a second UMTS-based end user unit via a second gateway on the TCP 2. Thus, several media are used to establish one communications link between the two end user units. Preferably, the communication is established according to the most effective path. Most effective preferably means the path with the highest quality of service. It may also mean the path with the lowest cost or billing structure, or a combination of these criteria.

Preferably, the multimedia chain not only provides for one path or channel but for several channels parallely. Thus, one multimedia chain may preferably exist of several paths connecting one end user unit to another end user unit or even several end user units. These parallel multimedial chains may be identical or different to each other. Thus, it is possible to connect a person using a telephone and a fax machine parallely to another person using one TCW on a computer and a UMTS device. The basic arrangement has two parallel paths or channels. These paths may be identical or based on different media. Such a path may include only one media each

[01] The object of the invention is also achieved by a communications environment, comprising: a first end user unit (EUU1) being adapted to perform network-based communications, and a web site including at least one web page, wherein the web site is a telecommunications web site (TCW) corresponding to a specific entity (SE), and the telecommunications web site (TCW) is adapted to provide, upon an access by the first end user unit (EUU1), for direct private communications between the first end user unit (EUU1) and the specific entity (SE), including a connection means (CM) for establishing a communications link from the first end user unit (EUU1) to the specific entity (SE) of the telecommunications web site (TCW). With this combination of a TCW with a connection means, it is possible to connect different end user units from different technical environments to each other. One PSTN-end user unit may connect to an IP-end user unit by virtue of the connection means. This connection is provided and/ or established by virtue of the TCW. Preferably, this connection is established via the TCW.

[02] In a preferred embodiment, the connection means (CM) is controlled by the telecommunications web site (TCW). By controlling the connection means by the TCW, the TCW can work as a "virtual operator". The TCW can now connect two or more end user units by controlling the connection means that are used to establish this specific connection between these end user units. This connection is established and/ or provided by the TCW, not necessarily via the TCW. Of course, one of the end user units can be the TCW of the specific entity or the computer controlling the TCW, respectively.

[03] Preferably, the connection means (CM) is a converter, an adapter, an IP-switch, an ATM-switch, a mechanical or electro-mechanical switching board, a protocol translator, a gateway, especially a telephone network gateway, a UMTS/ G3 network gateway, a computer network gateway, a television network gateway, a cable network gateway and/ or an Internet gateway or a combination of these components. With these components, the TCW may establish a connection between the specific end user units building up chains of components to establish this connection. Preferably, these chains of components also comprise transport means like cable, wire, networks, radio communications, etc.

According to a preferred embodiment, a first gateway (G11,..., G1n) is provided for establishing a communications link from the first end user unit (EUU1) to the telecommunications web site (TCW) in response to a request by the first end user unit (EUU1) to access the telecommunications web site (TCW). Thus, the use of any end user unit for communicating by means of the communication environment is enabled. As an example, the first gateway can provide for a link between a PSTN network and a computer network or the Internet. Thus, a telephone as a first end user unit can communicate with a personal computer connected to the Internet as a second end user unit.

In another preferred embodiment, the communications environment according to the present invention includes a second gateway (G21,..., G2n) for establishing a communications link from the telecommunications web site (TCW) to the specific entity (SE) in response to the direct private communications provided by the telecommunications web site (TCW). Thus, various additional end user units can be connected to each other via the telecommunication web site TCW.

As a result, in a comparable manner, a restriction to any special type of specific entity usable with the telecommunications web site can be resolved. According to a preferred embodiment, a second gateway is provided for establishing a communications link from the telecommunications web site to the specific entity in response to the direct private communications provided by the telecommunications web site. As an example, the second gateway can provide for a link between the telecommunications web site to a PSTN network, a computer network or the Internet servicing the specific entity.

With respect to both the first and second gateways, a communications link is not limited to a single physical data transmission link or line, but can include different transmission paths, utilized in series and/or in parallel. Thus, communications links can comprise communications links within different networks. Further, communications links can be established to different communications sources and/or destinations at the same time, e.g., in the case the first end user unit and/or the specific entity include different devices or means for sending and receiving communications data/information.

[03] To enhance the performance of the communications environment according to the present invention and to obtain, at least partially, independence from other communications environments, the communications environment can comprise a network including at least one of a telephone network, a computer network and/ or the Internet for performing at least one of the network-based communications and the direct private communications.

[04] In this sense an optimization can be achieved by at least one of the first gateway and second gateway being at least one of a telephone network gateway, a computer network gateway and an Internet gateway.

[08] Preferably, the object of the invention is accomplished by a first telecommunications web site (TCW1) corresponding to a first specific entity (SE1), wherein the first telecommunications web site (TCW1) is adapted to provide, upon an access by a second telecommunications web site (TCW2) corresponding to a second specific entity (SE2), for direct private communications between the first specific entity (SE1) and the second specific entity (SE2)

[09] In a preferred embodiment of the first telecommunications web site (TCW1) of this invention, the first and/ or the second telecommunications web sites are/is adapted to provide, upon an access by the other telecommunication web site, for data exchange between the first and the second telecommunications web site (TCW).

[10] Preferably, the object of the invention is also accomplished by a method for providing communications, including the steps of:
providing a first telecommunications web site (TCW1) including at least one first web page corresponding to a first specific entity (SE1) and being adapted to provide direct private communications,
providing a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2).

[11] A preferred embodiment of the method of the invention includes the step of:
providing, in response to the accessing, for data exchange between the first and the second telecommunications web site (TCW).

With this combination of a TCW and a connection means, especially a gateway, it is for instance possible for the specific entity as host of the TCW to establish a communication between the internet-based TCW and a PSTN-network. Thus, it is not only possible to establish a communication over two telephones via the Internet but via a PSTN-network. The specific entity as host of the TCW can e.g., choose a connection between a first telephone as a first end user unit and another telephone as a second end user unit. The access to establish this communications link will then be initiated from the TCW via a controlling device to a PSTN-network between these two telephones. As an example, both telephones begin to ring - the connection is established in the PSTN-network between these two telephones on access through the TCW - but not via the TCW.

The object of the invention is also achieved by a multimedial communications environment, comprising: a telecommunications web site (TCW) corresponding to a specific entity (SE), a first connection means (CM1) adapted to connect a first end user unit (EUU1) and a first end user unit (SE-EUU1) of the specific entity (SE), a second connection means (CM2) adapted to connect a second end user unit (EUU2) and a second end user unit (SE-EUU2) of the specific entity (SE) wherein both the first connection means (CM1) and the second connection means (CM2) are controlled by the telecommunications web site (TCW). With this arrangement, it is possible to have a multimedial connection between two or more parties. This arrangement may be adapted to use the best connection for each medium or each line, respectively. The "best connection" may be the connection with the best quality of service or the lowest costs or a combination thereof.

Multimedial is the use of more than one medium like devices of PSTN-networks, UMTS-networks, TCP/IP based networks, etc. For example, the connection of a telephone in a PSTN-network to a UMTS device in an UMTS-network is a multimedial connection. This connection parallel to a connection of a computer in a TCP/IP based network to another computer in a TCP/IP based network is also a multimedial connection. Thus, the use of more than one medium to establish and provide a connection is a multimedial connection. Further, the parallel use of different media is a multimedial connection.

Preferably, the first connection means (CM1) is an IP-switch and/ or the second connection means (CM2) is a PSTN-switch. Thus, it is possible to connect two parties each using a telephone in a PSTN-network and a computer with a camera to exchange real time video data at the same time. Since the TCW is in control of both connection means, it is possible to handle this multimedial connection by the simple control of the TCW, i.e. a simple mouse click in a browser based application. Establishing such a multimedial connection is achieved by choosing the party to be called in the TCW and choosing the kind of connection(s) to be established. All different multimedial connections are then established by the TCW that controls the respective connection means CM to establish such a connection. In addition, the TCW controls the multimedial connection by controlling the respective connection means. If the connection is to be terminated, the TCW manages the shut down of all types of connection involved.

Preferably, the first end user unit (EUU1) and/ or the first end user unit (SE-EUU1) of the specific entity (SE) comprises at least one video device, especially a video camera and/ or a video monitor. Especially wherein the second end user unit (EUU2) and/ or the second end user unit (SE-EUU2) of the specific entity (SE) comprises at least one PSTN device, especially a stationary telephone and/ or a mobile telephone. With such an arrangement, it is possible to establish a video conference. Preferably, such a video conference is a combination of a PSTN-connection for the voice and a TCP/IP connection for the pictures to be transmitted. With such an arrangement, the voice will be transmitted with no delay and the pictures may have a certain delay in the transmission which on the other hand is acceptable for communication.

The object of the invention is also achived by a telecommunications web site (TCW) corresponding to a specific entity (SE) comprising a first connection means (CM1) adapted to connect a first end user unit (EUU1) and a first end user unit (SE-EUU1) of the specific entity (SE), a second connection means (CM2) adapted to connect a second end user unit (EUU2) and a second end user unit (SE-EUU2) of the specific entity (SE) wherein both the first connection means (CM1) and the second connection means (CM2) are controlled by the telecommunications web site (TCW). With such a telecommunications web site, a multimedial connection can be established and provided.

Further, the object of the invention is achieved by a method of connecting two parties (A, B) in a multimedial communications environment comprising the steps of:
connecting to a telecommunications web site (TCW), choosing the kind of multimedial connection to be established, establishing each part of the chosen multimedial connection via a connection means (CM) controlled by the telecommunications web site (TCW). With this method, a multimedial connection or link can be established that allows for parallely using different end user units in one connection to another party.

[01] The object of the present invention is also achieved by a communications environment, comprising a first web site including at least one web page, wherein the first web site is a first telecommunications web site (TCW1) corresponding to a first specific entity (SE1), and a second web site including at least one web page, wherein the second web site is a second telecommunications web site (TCW2) corresponding to a second specific entity (SE2), and the first and/ or the second telecommunications web sites are/is adapted to provide, upon an access by the other telecommunication web site, for direct private communications between the first specific entity (SE1) and the second specific entity (SE2). With two TCW's, both, calling entity and called entity can benefit from the communication options and opportunities of a TCW.

[02] In a preferred embodiment of the communications environment of the present invention, the first and/ or the second telecommunications web site are/is adapted to provide, upon an access by the other telecommunication web site, for data exchange between the first and the second telecommunications web site (TCW). Thus, it is possible to exchange data between both TCW's without the specific entities having to actively communicate about the content of this data. The data exchange can take place simultaneously or even before the direct and private communication between the specific entities is established.

[03] Preferably, the data exchange comprises data including at least one of:
- personal data of the specific entity (SE);
- communication preferences of the specific entity (SE);
- background information of the specific entity (SE); and
- a combination of any of the aforementioned data.
Thus, it is possible that specific data is exchanged that may have changed and needs to be updated. This can take place without the first specific entity having to actively inform the second specific entity about this new information and vice versa. Preferably, both TCW's exchange data. It is also possible that only one of the communicating TCW's provides data and the other TCW is adapted to download this data.

Such data to be exchanged may be personal data of the specific entity such as contact information (telephone number, fax number, e-mail, address, etc.), data of a more personal kind like birthday, matrimonial status (married, bachelor, etc.), nationality, home address, photos, movies, videos, articles, text, religious confession, professional information, etc.

Further, communication preferences of the specific entity may be exchanged. Such preferences may include the way how the person wants to be contacted (via telephone, via video-conference, via e-mail, etc.) or the time when this person wants to be contacted or the time zone in which the specific entity lives or works (western time, European time, etc.), meta information on communication, languages, data exchange formats, passwords, cookies, requirement of ssl-connection, virus scanner information, etc.

Further, background information of the specific entities may be exchanged like hobbies, personal interests, a résumé of the specific entity, a homepage, etc.

[04] It is especially preferred that the kind of data to be exchanged is predefined by the specific entity. Thus, the specific entity can not only define the content of the data to be exchanged but also define what kind of data is to be exchanged. With that feature, the TCW can be prepared to share exactly the information and exchange that kind of data the specific entity predefined to share.

[05] In a preferred embodiment, the data is exchanged automatically. Thus, (new) data can be provided to the calling party, e.g., SE1 from the called party SE2 without having to communicate actively about the new data. In a further embodiment, the data is exchanged on request of one party, e.g., the calling party (SE1) can select a button provided on the second TCW in order to download the data from the second specific entity.

[06] In a preferred embodiment of the present communication environment there are provided more than two telecommunications web sites (TCWi). Thus, it is possible to communicate with more than one specific entity via the personal TCW of different entities. With such a standardized group of specific entities all using a personalized TCW, it is extremely easy to communicate and share information or exchange data to be distributed for the first time or updated. It is possible to inform people of a new address after having moved without the need to call and inform each person. The specific entity with the new address will inform any other specific entity with a TCW automatically the next time when communicating via the data exchange between the first and second TCW "without mentioning" the new address actively.

[07] In a preferred embodiment of the communication environment of the present invention, all telecommunications web sites (TCW) answer to the same basic protocol of data exchange. Thus, it is possible to exchange a minimum piece of information on each specific entity of a TCW via the data exchange between the TCW's. With such a standardized basic information protocol it is possible to exchange necessary data that should always be exchanged between all specific entities using a TCW. Such data is preferably available communication channels, a security password, recognition data (cookies), virus scanner updates, software updates.

The object of the invention is also achieved by a first telecommunications web site (TCW1) corresponding to a first specific entity (SE1), wherein the first telecommunications web site (TCW1) is adapted to provide, upon an access by a second telecommunications web site (TCW2) corresponding to a second specific entity (SE2), for direct private communications between the first specific entity (SE1) and the second specific entity (SE2). With such a telecommunications web site, full advantage can be taken of the communication via a TCW.

Preferably, the first and/ or the second telecommunications web sites are/is adapted to provide, upon an access by the other telecommunication web site, for data exchange between the first and the second telecommunications web site (TCW).

The object of the invention is also achieved by a method for providing communications, including the steps of:
providing a first telecommunications web site (TCW1) including at least one first web page corresponding to a first specific entity (SE1) and being adapted to provide direct private communications,
providing a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2).

In a preferred embodiment the method includes the step of
Providing, in response to the accessing, for data exchange between the first and the second telecommunications web site (TCW).

As a result, it is advantageous to use two TCW's communicating with each other. Thus, an enhanced, faster, more secure and more pleasant through automation way of communication is possible.

[01] A communications environment wherein at least one telecommunications web site (TCWi) is provided on a portal (P) further achieves the object of the invention. For providing the telecommunications web site, it is preferred to use a portal or a cluster of sub-portals serving as a portal. Every member of the portal may use the infrastructure of the portal. This enhances the nature of the telecommunications web site to serve as a general purpose communications interface or communications "window".

A portal preferably has several resources which are accessible by all members of this portal. Thus, all members can share these resources. The members of a portal do not have to have their own resources but can benefit from the resources provided by the portal. Such resources can be services or content data. Preferably, the services comprise navigation help like search tools or directories, communication tools like chat forum or e-mail or mobile phone services or a calendar tool or newsgroup servers/ directories or encrypting services like certifications for secure communications or wake-up services. Further, the portal might comprise entertainment services like games in the field of the stock exchange market, services of a betting office, comics, greeting cards or radio stations to listen to. Further, the portal might provide services on traffic information, download areas for software, providing webspace, services on registering domains, etc. Preferably, the portal provides content data like for instance news on financial issues, sport events, political news, television program, weather information or horoscopes. Further it might provide information systems for route planning, consumer services like ordering newsletters, online-shopping, modules for comparing services like telephone fees, car rental fees or insurances. Further, the portal might provide certain services with respect to the communication of the telecommunication web sites, e.g. a server shared by all TCW's that provides the history information of the connections of the TCW.

[02] Preferably, the portal (P) comprises connection means (CM) accessible by the at least one telecommunications web site (TCW). Such connection means are also resources of the portal that can be used by the web sites of the portal. These connection means may be means with which the portal can connect to another network as described above. Preferably, such connection means are converters, adapters, IP-switches, ATM-switches, protocol translators, gateways, especially UMTS network gateways, or a combination thereof. With such resources, the portal is a more advanced communication platform since on the portal resources are provided which the single user of a telecommunication web site usually can not afford to acquire.

[03] To enhance the nature of the Telecommunication Web site to serve as a general communication interface it is preferred to use a portal of Telecommunication Web sites, a telecommunication portal or TCP. The Telecommunication Portal represents an accumulation of Telecommunication Web sites on the specific portal. The Telecommunication Portal has preferably an integrative consistent addressing scheme, comprising every single unique Telecommunication Web site residing on this Telecommunication Portal and thus enabling the definite assignment of different Telecommunication Web sites of a specific Telecommunication Portal by the structure of the Telecommunication Web site address. Preferably, such an integrative consistent addressing scheme is based on the same top and/ or second level domain. Thus, the user with the NAME1 of a portal WEB.DE may have an address according to an addressing scheme "NAME1.WEB.DE", another user with the NAME2 may have the address "NAME2.WEB.DE". The NAME can be an alphanumerical figure, preferably a telephone number. Especially preferred is a telephone number with an alphanumerical prefix, designating the country of the user and/ or the portal. In another preferred embodiment, such an addressing scheme is the use of a common feature in all the addresses of the users of one portal. Such a common feature may be a prefix, a suffix, a certain format of a telephone number used as address, etc. Thus, it can be recognized from the address, whether this user belongs to a certain portal or not.

[04] Preferably, the residing Telecommunication Web site on one portal are connected to each other. In contrast to Telecommunication Web sites not belonging to a specific Telecommunication Portal and thus communicating with each other by means of public accessible communication networks like the internet, PSTN-networks, etc., the Telecommunication Portal i.e., the TCW's on a portal, provides a particular, "physical" connection, e.g., a fiber optics or copper cable interconnection, that allows a stable, high speed and high-performing data transmission capability between different Telecommunication Web sites belonging to the same Telecommunication Portal and thus enhancing the communication possibilities. Preferably, the TCW's of one portal are located on one server and use the same database.

[05] The object of the invention is also achieved with a telecommunications portal (TCP) comprising at least two telecommunications web sites (TCWi), wherein the telecommunications web sites (TCWi) on the portal (P) have an integrative consistent addressing scheme.

[06] Further, the object of the invention is achieved by a method for providing communications, including the steps of:
providing a first telecommunications web site (TCW1) including at least one first web page corresponding to a first specific entity (SE1) and being adapted to provide direct private communications,
providing a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2)
characterized in that both telecommunications web sites (TCW1, TCW2) reside on one portal (P).

The object of the invention is also achieved by a communications environment, comprising: a first web site including at least one web page, wherein the first web site is a first telecommunications web site (TCW1) corresponding to a first specific entity (SE1), and a second web site including at least one web page, wherein the second web site is a second telecommunications web site (TCW2) corresponding to a second specific entity (SE2), and the first and/or the second telecommunications web sites are/is adapted to provide, upon an access by the other telecommunication web site, for direct private communications between the first specific entity (SE1) and the second specific entity (SE2) wherein both the first and the second telecommunications web site are provided on a portal (P). With two TCWs provided on a portal, enhanced communication patterns can be used. Thus, communication between two TCWs on a portal is accomplished faster and more securely.

In a preferred embodiment of the communications environment of the present invention, the first and/ or the second telecommunications web sites are/is adapted to provide, upon an access by the other telecommunication web site, for data exchange between the first and the second telecommunications web site (TCW). With such a data exchange, the communication between both TCWs can be improved. This data exchange can be accomplished faster since both TCWs are on the same portal.

Preferably, the data exchange between the two TCWs can be accomplished as in the case of two TCWs not belonging to the same portal - but much faster and according to certain protocols that are valid on the portal. Another advantage of Telecommunication Portals is the uniformed/standardized type of information and data which can be provided through a Telecommunication Web site and the way the information is processed, e.g., personal information of the specific entity (SE) corresponding to the Telecommunication Web site or presence information.

Moreover the Telecommunication Web site provides for a certain degree of trust applying to the data that is provided by a Telecommunication Web site on the one hand and the SE corresponding to a specific Telecommunication Web site on the other hand. This again enhances the communication possibilities and in particular the speed of data transmission between Telecommunication Web sites of the same Telecommunication Portal by the automation of certain authorization processes.

Thus, the arrangement of TCW's on a portal enables an enhanced communication between SEs corresponding to specific Telecommunication Web sites belonging to the same Telecommunication Portal by allowing for instance SE1 to access SE2 using e.g., a stationary telephone EUU1 and nevertheless allowing the called SE2 to find out automatically, that SE1 is on his part assigned to a Telecommunication Web site of the same Telecommunication Portal. Thus, it is possible to establish a communication link not only to EUU1 but also to a multitude of single devices or means (EUUs). Moreover, the Telecommunication Web site of SE2 is able to establish automatically such enhanced communication to different EUUs without requiring further action of one of the communicating entities since this information is present on the same portal. Thus, TCW1 knows automatically all possible EUU's assigned to SE2 and may use these for providing/ establishing a communication between SE1 and SE2.

Furthermore it is possible to access a certain Telecommunication Portal in order to retrieve data about the different Telecommunication Web sites residing on that Telecommunication Portal in total, for instance about the structure of SEs (natural persons or companies, etc.) corresponding to the Telecommunication Web sites on this Telecommunication Portal.

In contrast to the communication scenarios provided by two communicating Telecommunication Web sites independently organized (i.e., without residing on or belonging to a specific Telecommunication Portal), through automation an enhanced, faster, more secure and more pleasant way of communication is possible.

Since the telecommunications web site are residing on or provided by a portal, communication will be arranged "in between" the communicating parties, here the first specific entity of a first TCW1 and the second specific entity of the second TCW2, in a physical sense. Since both telecommunication web sites are physically provided on the same portal, communication and especially data exchange can be accomplished much faster. In addition, the communication protocol may be standardized within one specific portal. Thus, the connected telecommunication web sites can communicate directly since both TCW's "know" what data is to be exchanged within this specific portal without having to crosscheck. This provides a faster and more secure connection between both TCW's of a specific portal.

Preferably, the portal is also adapted to establish communications links for performing the direct private communications. For example the portal can, upon an access by the first telecommunication web site TCW1 to the second telecommunications web site TCW2, establish a communications link there from to the first telecommunications web site TCW1. This communications link may be different compared to the communications link used for the access. As an option or in addition thereto, the portal can establish a communications link from the telecommunications web site to the specific entity or to an associated end user unit.

The object of the invention is also achieved by a communications environment wherein at least two portals (P1, P2), each comprising at least one telecommunications web site (TCW1i, TCW2j), are provided. With two telecommunications portals (TCP1, TCP2), communication can be established between a first TCW1 residing on the first portal P1 and a second TCW2 residing on the second portal P2. With the use of two portals, the TCW's residing on different telecommunication portals (TCP's) may benefit from the infrastructure of both the TCP's when connecting.

[02] In a preferred embodiment of the communications environment of the invention, the portals (P1, P2) are adapted to establish at least one communications link for performing communications, especially direct private communications. Thus, the communication may be established between an end user unit 1 of a TCW 1 on the TCP 1 that is supplied by a first gateway or connection means CM 1 not available on the TCP 2. Nevertheless, a communications link can be established since both TCP 1 and TCP 2 are connectable to each other.

[03] Preferably, the two portals communicate according to a common protocol. With the use of a common protocol, the communications link can be established not only in a basic way but in a more enhanced way. This allows for more speed and security in the communication between both TCP 1 and TCP 2. Such a protocol may define specific ways of exchanging data and even specify certain information on the TCW's of the different portals to be shared between both the portals TCP 1 and TCP 2.

[04] Preferably, the communications link is a synchronous communication link. With such a synchronous communications link like an ATM-link, the communication between the portals can be realized in a real-time mode. This means that the communication is not irritated by delays in the transmission of the data. Preferably, the data packages are sent and received without delay that would cause an irritation with a human being, i.e. not causing a delay of more than 500 ms, preferably not more than 250 ms. A link with such little delay is accepted as "synchronous". Preferably, the communication is not randomly packet orientated like in a TCP/IP connection. With TCP/IP, the data package is routed from the sender to the receiver according to a routing strategy. As a result, a package sent at a time t1 may be received by the receiver after having received a second package sent after the first package at time t2. The receiver then brings all packages back into order. Thus, the packages are received "asynchronous" rather than package after package, i.e. "synchronous". If the packages are sent and received fast enough and brought back into order without causing a delay of more than 500 ms, such a link was still a synchronous link.

Possible ATM-links may be realized using ATM passive optical networks (APON), direct optical fiber connections or copper wires with for instance ADSL/ HDSL technology, ATM-radio links (ATM-Wireless Local Loop, ATM-WLL), etc. Preferably, the connection link is established via a dedicated line.

[multimedial chain] Preferably, the communications link is a multimedial chain. Thus, it is possible to combine several communications links to one communications link. A multimedial chain is a chain of different kinds of communications links. For instance, a PSTN-end user unit 1 may be connected via the PSTN-network via a gateway to the Internet. Via the TCP/IP protocol it may reach the TCW 1 on the portal TCP 1. Then, a link from portal TCP 1 to TCP 2 is provided via an optical fiber followed by an ATM-WLL connection. On portal TCP 2, the connection is realized via the TCP/IP protocol and to a second UMTS-based end user unit via a second gateway on the TCP 2. Thus, several media are used to establish one communications link between the two end user units. Preferably, the communication is established according to the most effective path. Most effective preferably means the path with the highest quality of service. It may also mean the path with the lowest cost or billing structure, or a combination of these criteria.

Preferably, the multimedia chain not only provides for one path or channel but for several channels parallely. Thus, one multimedia chain may preferably exist of several paths connecting one end user unit to another end user unit or even several end user units. These parallel multimedial chains may be identical or different to each other. Thus, it is possible to connect a person using a telephone and a fax machine parallely to another person using one TCW on a computer and a UMTS device. The basic arrangement has two parallel paths or channels. These paths may be identical or based on different media. Such a path may include only one media each

[06 ] The object of the invention is also achieved by a first telecommunication portal (TCP1) comprising at least a first telecommunications web sites (TCW1i), wherein the first telecommunications portal (TCP1) is adapted to provide for establishing at least one communications link to a second telecommunications portal (TCP2).

[07] In a preferred embodiment of the first telecommunications portal (TCP1) of the invention, the communications link is established according to a protocol predefined by the first telecommunications portal (TCP1). [05] Preferably, the first telecommunications portal (TCP1) provides for more than one protocol. Such a protocol may define the way in which communication is established between the two portals. A portal can have more than one protocol, preferably one protocol is chosen for establishing communication between two portals. With such protocols, the communication between two TCWs belonging to different portals can be enhanced. Such a protocol may define the way of automatic data exchange between the portals.

Such data may comprise the infrastructure of the portal, e.g. the kind and number of resources of the portal, information on which resources may be used by "visitors", conditions that have to be satisfied to allow the usage of these resources, security information, information on the capacity of the portal and/ or the resources, number of TCW's in the portal, languages spoken, lists of protocols, information of the time zone in which the portal is operated, etc.

Preferably, the protocol provides a definition of the kind of data to be exchanged between a first telecommunications web site (TCW1) of the first telecommunications portal (TCP1) and a second telecommunication web site (TCW2) of the second telecommunications portal (TCP2).

Especially preferably, the communication link is established between the first telecommunications web site (TCW1) and a second telecommunications web sites (TCW2) of the second telecommunications portal (TCP2).

The object of the invention is also achieved by a method for providing communications, including the steps of:
providing a first telecommunications portal (TCP1) including a first telecommunications web site (TCW1) including at least one first web page corresponding to a first specific entity (SE1) and being adapted to provide direct private communications,
providing a second telecommunications portal (TCP2) including a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2) via a communications link between the first telecommunications portal (TCP1) and the second telecommunications portal (TCP2).

Preferably, the communications link is a physical linkage and/ or a dedicated ATM linkage and/ or a virtual private network.

Preferably, the method comprises the step of selecting a joint protocol for the communications link between the first telecommunications portal (TCP1) and the second telecommunications portal (TCP2).

Especially, the interrelation of two Telecommunication Portals is defined by their connection. Corresponding to the above described connection between different Telecommunication Web sites residing on the same Telecommunication Portal again it is preferred to build up either a "physical" linkage between two Telecommunication Portals or a dedicated ATM linkage(ATM = Asynchronous Transfer Mode) or a virtual private network. Other possible and preferred connections and links between two portals are described above.

This in turn enhances the data transmission capability between TCW1 belonging to TCP1 and TCW2 belonging to TCP2 in the same way it is enhanced within the same Telecommunication Portal.

In a preferred embodiment, the identical protocol of two web sites on the same portal is applied for the communication between two portals. Thus, the above mentioned uniformed/standardized type of information and data which can be provided through a Telecommunication Web site is processed between two telecommunication portals.

In another preferred embodiment, the protocol used between two portals differs from the one used for two web sites residing on the same portal. For instance, a Telecommunication Portal dedicated to a certain company retrieves different data of the SEs corresponding to the single Telecommunication Web sites residing on this Telecommunication Portal (e.g., rank, department, scope of duties) than a Telecommunication Portal dedicated to a commercial TCW-provider would.

Preferably, these standards differ from one Telecommunication Portal to another, which leads to a further characterization of the correlation of two different Telecommunication Portals: Different Telecommunication Portals can agree on terms of enabling the conversion of certain data and information on basis of e.g., a certain joint protocol. The areas of such conversion could be more or less restrictive, depending on the degree of trust between these Telecommunication Portals.

The advantage of a communication of two Telecommunication Web sites belonging to different Telecommunication Portals is the range of possibilities for building up a communication link between them. In the case of no existing "physical" or virtual private linkage between the two Telecommunication Portals a communication of the two Telecommunication Web sites is possible via public accessible communication networks such as the Internet or the PSTN-networks. Moreover, although the data transmission capabilities in this case are well below those provided by a private linkage they are still clearly higher than even the capabilities of two TCP-independent Telecommunication Web sites because of the above described opportunities of joint protocol-based automatic data adjUMTSent.

The object of the invention is also accomplished by a computer program product, including program code portions for carrying out the steps according to one of the methods according to the invention. Preferably, the object of the invention is accomplished by a computer program product, being stored on a computer readable storage medium or in a computer readable memory unit.

### Short description of the figures

In the following description of preferred embodiments of the present invention, it is referred to the accompanying drawings, wherein:
- Fig. 1:: illustrates direct private communications between a first end user unit and a specific entity via the telecommunications web site according to the present invention,
- Fig. 2a to 2d:: illustrates four basic schemes according to which participants of the communication can be connected via a telecommunication web site;
- Fig. 3:: illustrates an embodiment of the communications environment according to the present invention,
- Fig. 4:: illustrates a further embodiment of the communications environment according to the present invention;
- Fig. 5a and 5b:: illustrate two different ways in which participants of a communication can be connected via a telecommunication web site;
- Fig. 6:: illustrates the basic scheme, in which a participant A can communicate with a participant B using two different end user units that are controlled by the same TCW at the same time;
- Fig. 7a and 7b:: illustrates a basic scheme in which participants can communicate via one TCW or even two TCWs;
- Fig. 8:: illustrates an embodiment of the communications environment according to the present invention featuring a telecommunications web site portal;
- Fig. 9:: illustrates another embodiment of the present invention in which on one portal two telecommunication web sites TCW1 and TCW2 are provided;
- Fig. 10:: illustrates an embodiment of the communications environment according to the present invention including two telecommunications web site portals; and
- Fig. 11:: ilustrates a further embodiment of the present invention with two telecommunication portals TCP1 and TCP2 allowing communication between two participants.

### Description of preferred embodiments

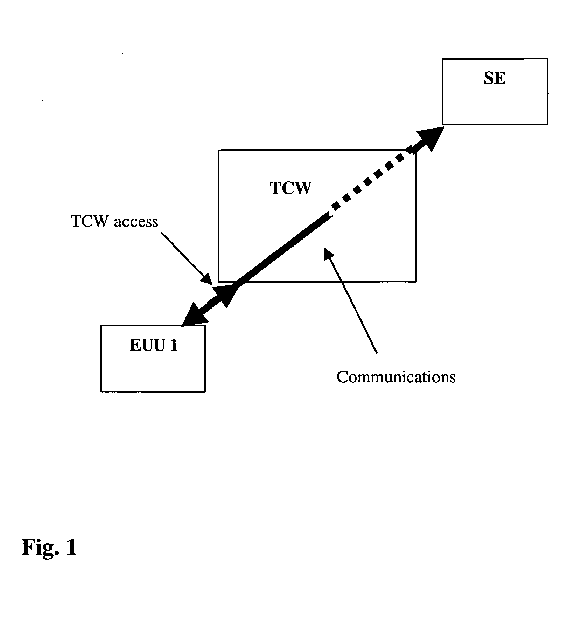

As shown in **figure 1,** a first end user unit EUU1 accesses a telecommunications web site TCW that in response thereto establishes a direct and private communications with a specific entity SE. The direct and private communications are only performed between the first end user unit EUU1 and the specific entity SE such that further parties cannot participate. As set forth above, the telecommunications web site TCW serves as a general-purpose communications interface or "window" which is illustrated in Fig. 1.

The first end user unit EUU1 can be embodied as single communications unit, like a stationary/mobile telephone, fax device, computer system and the like. Further, in order to increase the communications capabilities, the first end user unit EUU1 can include more than one communications unit which can be individually used or used in parallel for accessing the telecommunications web site TCW and communicating via the telecommunications web site TCW.

As opposing communications party, the specific entity SE is primarily characterized as entity to which the telecommunications web site TCW is associated to, i.e., the telecommunications web site TCW is personalized for the specific entity SE. For addressing the specific entity SE and communicating therewith, the telecommunications web site TCW is accessed by the first end user unit EUU1 by means of an address-like identification uniquely indicating the telecommunications web site TCW and, thus, the specific entity SE. For example, a user of the first end user unit EUU1 enters address information characterizing the specific entity SE, e.g., a company or a person, to be contacted. On the basis of the provided address information, the telecommunications web site TCW is accessed and establishes in response thereto the direct and private communications with the specific entity SE, e.g., the company or person with whom communications are intended by the caller.

For communications purposes, the specific entity SE can include a single communications unit, like a stationary/mobile telephone, fax device, computer system and the like. Further, in order to increase the communications capabilities, the specific entity SE can be comprised of more than one communications unit which can be individually used or used in parallel for communicating via the telecommunications web site TCW.

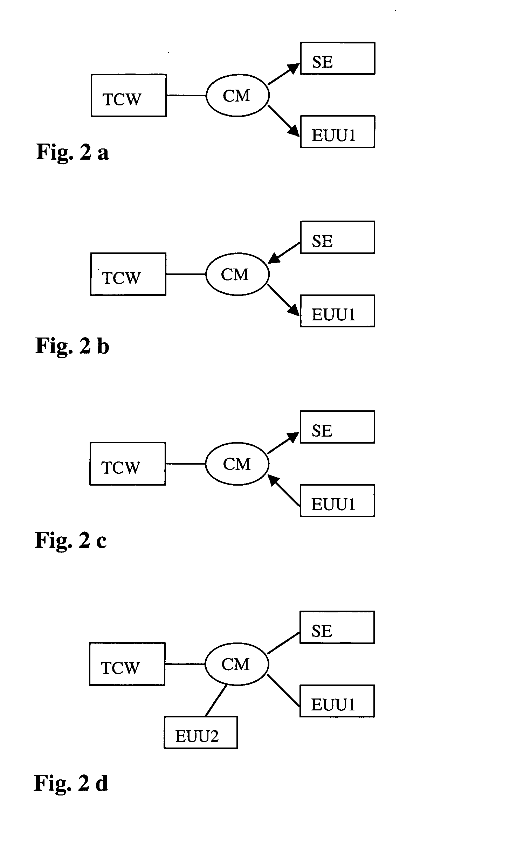

In **figures 2a to 2d**, a first scheme of communication between a specific entity SE and end user unit EUUU1 is illustrated. The TCW has connection means CM. The TCW is connected to the connection means CM and controlls these connection means CM. Such connection means CM can be an IP switch, an adapter, a gateway, etc. The connection means CM is adapted to provide and establish communication between SE and EUU1.

In figure 2a the TCW may initiate via CM a connection to SE and at the same time a connection to EUU1. Both participants SE and EUU1 are then connected via the TCW controlling the connection means CM. As an example, SE may access the TCW and choose the request to establish communication between SE and EUU1. SE may be using a telephone, EUU1 may be using a mobile telephone. TCW now controlles the connection means CM to initiate a call to the stationary telephone of SE and to initiate a second call to the mobile telephone used as EUU1. Further, the connection means CM connects both the call to SE and the call to EUU1. Both telephones of SE and EUU1 begin to ring. The specific end user having initiated this call via the TCW may now pick up his/her phone and be connected to EUU1.

In figur 2b, SE is directly accessing the TCW via the connection means CM. The TCW now establishes a connection via the connecting means CM to the first end user unit EUU1. Thus, SE as the calling party can connect to EUU1 via the TCW, i.e. the connecting means CM.

In figure 2c, end user unit EUU1 initiates the connection by calling the TCW. The TCW then initiates a call to SE via the connection means CM. Thus, EUU1 is connected to SE via the connection means CM controlled by the TCW. With this embodiment of the present invention it is possible for the end user using EUU1 to directly connect to SE via the TCW without having to bother, which end user unit SE is using.

In figure 2d, the basic scheme of the communication between more than two participants is illustrated. SE may now initiate calls and connections via the TCW to invite another end user using the end user unit EUU2 into the call. Thus, basic functions like conference call, switching, forwarding, rejecting, parking, etc. are possible. It may be the case that SE and EUU1 are in communications, when EUU 2 is calling SE via the TCW. SE may then choose to park EUU land to talk to EUU2 while EUU1 is holding the line. SE may then decide to invite EUU1 into a conference with SE and EUU2. Thus, a communication between three participants is estalished.

As a result, the TCW may work like a "virtual operator" using the connection means CM and establishing a communication path between several participants of the communication. SE as the owner of the TCW may then decide which party to invite into the communication and which party to reject. Since the connection means may comprise not only switches like IP switches or switches in the PSTN network, but also gateways and protocol translaters, the TCW may be used as a virtual operator to establish all kinds of communication connections.

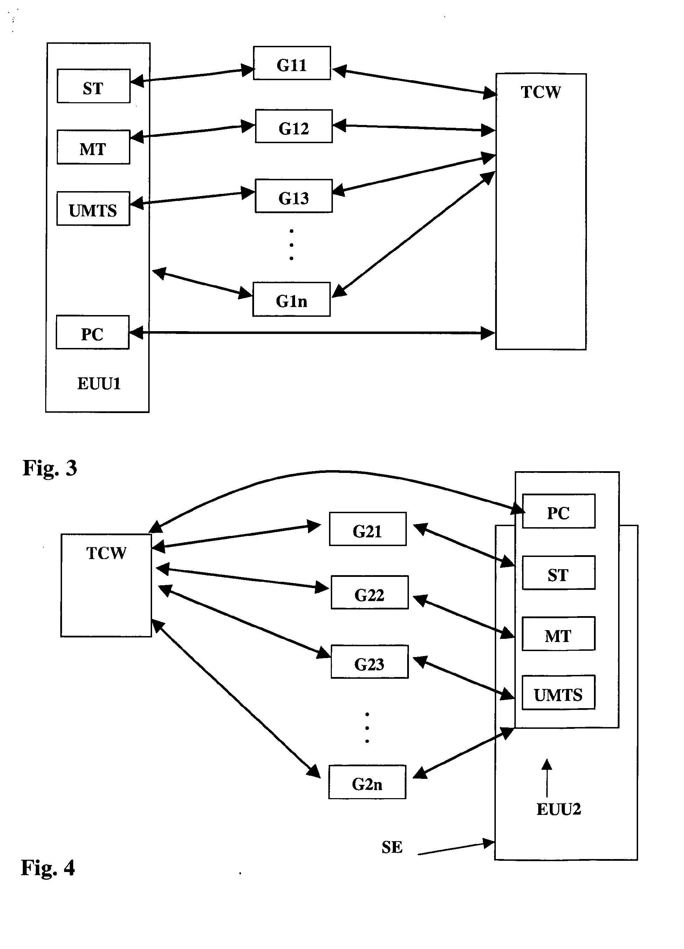

For accessing the telecommunications web site TCW and communicating via the telecommunications web site TCW, as shown in **figure 3**, the first end user unit EUU1 can use a direct communications link, e.g., over the Internet in the case where both the first end user unit EUU1 and telecommunications web site TCW are serviced by the Internet. Where the first end user unit EUU1 is a communications unit adapted for and/or serviced by a network different from a network the telecommunications web site TCW is relying on (here the Internet), respective gateways G11,..., G1n are used.

In particular, referring to figure 3, a gateway G11 is employed for telecommunications web site accesses and communications for a first end user unit EUU1 including a stationary telephone ST serviced by a PSTN network, while a gateway G12 is employed for a first end user unit EUU1 including a mobile telephone MT serviced by a mobile communications network. The number of gateways G11,... , G1n is not limited and will primarily depend on the type of the first end user units EUU1 and communications devices used.

In a comparable manner, as shown in **figure 4**, communicating via the telecommunications web site TCW with respect to the specific entity SE, a direct communications link can be used, e.g., over the Internet in the case both the specific entity SE and telecommunications web site TCW are serviced by the Internet. Where the specific entity SE is a communications unit adapted for and/or serviced by a network different from a network the telecommunications web site TCW is relying on (here the Internet), respective gateways G21,..., G2n are used.

Referring to figure 4, a gateway G21 is employed for telecommunications web site TCW accesses and communications for a specific entity SE including a second end user unit EUU2 comprising a stationary telephone serviced by a PSTN network, while a gateway G22 is employed for the second end user unit EUU2 comprising a mobile telephone serviced by a mobile communications network. Again, the number of gateways G21,... , G2n is not limited and will primarily depend from the type of the specific entity SE used and the communications devices comprised.

For example, where both the calling party (first end user unit EUU1) and the called party (specific entity SE) communicate by means of a personal computer, they communicate via the telecommunications web site TCW of the specific entity SE by means of a visual display on their personal computers which looks like, in appearance, like a web page. In contrast to a conventional web page, the telecommunications web site TCW is accessed by both parties at the same time: information inputted on one side will be displayed on the other side as it is being inputted. For example, in the case of text inputted by one party, the other party will be provided, on its display, the text as it is inputted by the transmitting user. Thus, in contrast to a conventional E-mail system, neither the sending party nor the receiving party is required to perform any interaction to transmit or receive, respectively, communications data.

Where both the first end user unit EUU1 and the specific entity SE communicate by telephone, communications will also be executed via the telecommunications web site TCW. In view of the restricted information display capabilities of a telephone, i.e., in general only the transmission of voice data optional with low resolution graphic data, such communications will appear as a conventional telephone conversation optional accompanied by visual information on one or both telephone displays - with the essential difference that communications are executed via the telecommunications web site TCW.

The impact of communications via the telecommunications web site TCW will be more evident for the case of communications between the first end user unit EUU1 utilizing a telephone and the specific entity SE communicating by means of personal computer. For example, a calling user associated with the first end user unit EUU1 intending to communication with a user associated with the specific entity SE, here from a telephone to a personal computer, accesses the telecommunications web site TCW of the user to be contacted by providing the respective address information via the telephone. In response thereto, the telecommunications web site TCW connects to the personal computer of the called user and, thus, establishes a communications link between the two users. For actually communicating, both users utilize the respective end user units, i.e., the telephone and the personal computer, in a conventional manner while the telecommunications web site TCW interfaces between the different types of end user units.

As a result, the telephone user will, in general, communicate by means of voice transmissions, while the personal computer user will receive communications in form of visual displays and transmit communications by inputting respective data into the personal computer. Optionally, the telephone user can operate keys of the telephone to input communications data and can be provided visual information on the telephone's display, both options being rather restricted in view of the capabilities of telephones.

Further, the personal computer user can input and receive acoustic data if using respective units (e.g., headsets). Nevertheless, the way both users operate the respective end user unit is not dependent from the end user unit of the other party. Rather, both users operate their end user units in a conventional manner, whereas, in contrast to conventional communications, different technologies are merged without specific interaction required to be performed by the users.

With respect to routing of communications links, the telecommunications web site TCW allows to use different networks in parallel and/or in series to perform communications. For example, in the case of video conferencing, the telecommunications web site TCW routes any data which can be visualized on a monitor data link suitable for video data (e.g., a computer/Internet-based network) while voice data will be communicated over a telephone network. As a result, the participating parties will benefit from the technical properties of the telephone network optimized with respect to a transmission voice data and from the quality of visual data transmission via a link designed for that purpose. Further, the participating parties are released from the burden to control transmission links for different data/content. Rather, the telecommunications web site TCW automatically selects, depending on the data to be transmitted, a suitable network. Since all data routing is automatically performed inside the communications environment, there is no need to use different end user units for data being transmitted via different communications links. For example, in the case of video conferencing, the participating parties can use personal computers equipped with a video camera and visual and acoustic display devices as integral end user units and, thus, will transmit and receive integral communications data, while, in contrast to the front end appearance of the performed communications, the different communications types are executed by means of separate networks.

In addition to a universal integration of different communications networks and end user units, the telecommunications web site TCW allows for an individual communications control for each party that is presently available for neither Internet-based communications nor conventional telephone communications. Known Internet-based and telephone network-based communications environments provide for standardized interfaces and standardized communications functionalities, both of which offer a limited range of modification possibilities for different users.

Also, the definitions for the telecommunications web site TCW can include indications how communications are to be routed to and/or from the first end user unit EUU1 and/or specific entity SE, e.g., via which gateway and/or which network communications will be executed to provide e.g., for personal computer-based communications, telephone-based communications, etc. Thus, it can be defined that particular end user units are allowed to communicate with the owner of the telecommunications web site TCW, i.e., the specific entity SE, on the basis of a computer-computer-link only, while other end user units are also allowed to communicate to/or from telephones.

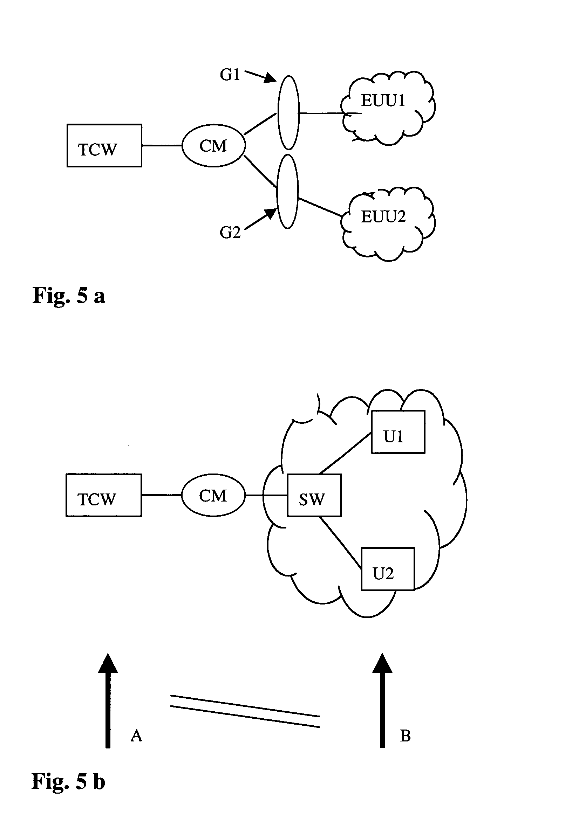

In **figures 5a and 5b,** possible configurations of connections are illustrated that are controlled by a TCW.

In figure 5a, end user unit 1 of a PCTN network wants to connect to a user using end user unit 2. The user of the EUU1 calls the TCW via a gateway G1 and a connection means CM. The TCW then initiates a connection to EUU2 via the connecting means CM and a gateway G2 into the UMTS network in which EUU 2 is situated. The connection is controlled by the TCW controlling the connection means CM. In this case, the connection means is an iP-switch controlling the connection established via the gateway G1 to the PSTN network in which EUU1 is situated and the gateway G2 into the UMTS-network in which EUU2 is situated. Thus, a connection between two completely different networks can be established via a TCW. As soon as the connection is terminated by the host of TCW, the connection means will terminate the connection between EUU1 and EUU2. Thus, the host of TCW, i.e. the specific unit SE, is in control of the connection between EUU1 and EUU2.

In figure 5b, a similar scenario to the one in figure 5a is illustrated. In this case, a user U1 seeks connection to user U2 also situated in the same kind of network, here a PSTN network. User U1 contacts the TCW. The TCW establishes a connection via the connection means CM controlling a switch SW and establishes a second connection to the user U2. These two connections to U1 and to U2 are then connected by the switch SW in the PSTN, i.e. a PSTN-switch. Again, the TCW is in total control over the connection between U1 and U2. If for instance the host of the TCW, that is the specific entity SE, accesses the TCW (indicated by arrow A) the specific entity may at the same time use the end user unit of U2, e.g. a telephone talking to the user U1 (indicated by arrow B). Thus, the specific entity may control the connection via the TCW and communicate with U1 by using the telephone U2. When choosing to terminate the connection, the specific entity may either terminate the connection by choosing so in the TCW accessed for instance by a browser. The specific entity may also terminate the connection by hanging up the telephone U2 and thus terminate the connection to U1. Further, the specific entity may choose to change the kind of end user unit he or she is using, i.e. U2 and connect via the TCW to another end user unit and continue the communication with U1.

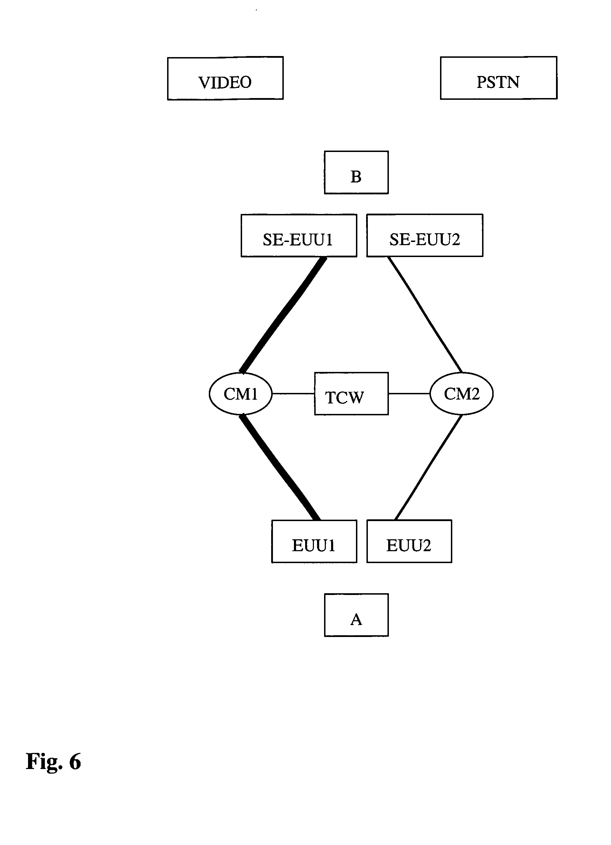

In **figure 6**, a schematic scheme is illustrated in which a person A communicates with a person B via a TCW using two different end user units EUU1 and EUU2 at the same time parallely. EUU1 connects via the TCW and the connection means CM1 respectively, to the end user unit SE-EUU1 of a specific entity B. At the same time, the participant A may connect to participant B with an end user unit EUU2 via the TCW and a connection means CM2, respectively, to an end user unit SE-EUU2 associated to B. The connection means CM1 may connect via TCP/IP video devices and monitors EUU1 and SE-EUU1 whereas the connection means CM2 is a PSTN-switch connecting a telephone EUU2 with another telephone SE-EUU2. With such an arrangement, a multimedial chain can be established with two different media channels, i.e. a video channel and a telephone channel. The person A may now be connected to the person B by telephone via a PSTN network. This connection is controlled by the TCW via the connection means CM2. At the same time, the video picture is transmitted via TCP/IP controlled by the TCW via the CM1. Thus, person A may speek to person B without any delays in the voice transmission via a PSTN network whereas the picture is transmitted via TCP/IP in a sort of acceptable service of quality with respect to the video pictures. Both communication channels are controlled by the same TCW and may be routed according to costs, quality of service, or other parameters critical for this kind of communication. In another preferred embodiment, a third and/or a fourth channel is established using additional media to communicate, for instance a fax machine, a UMTS decvice, a web page, etc.

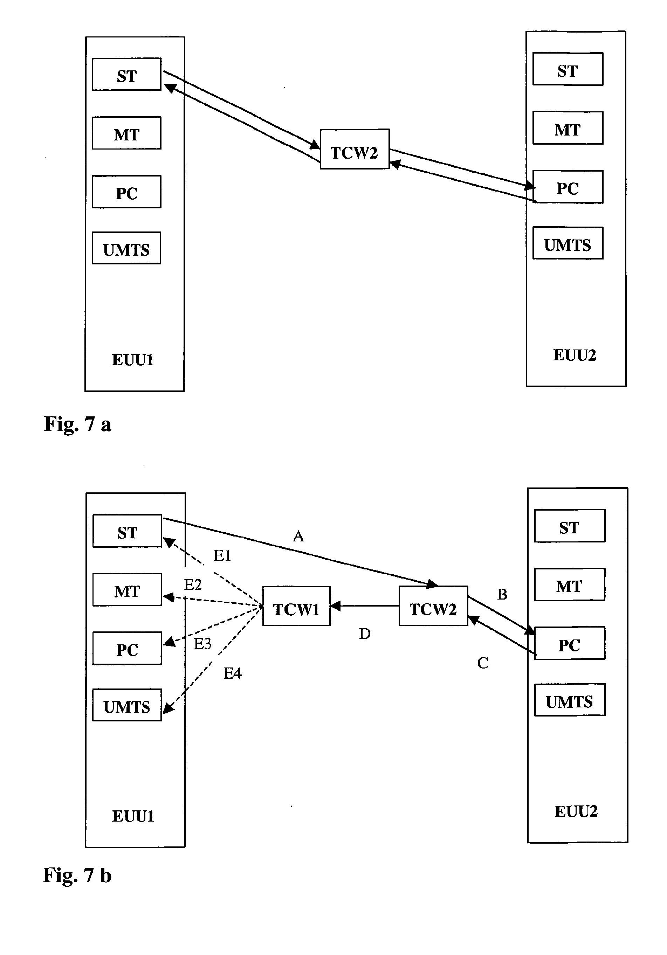

In **figures 7a and 7b**, a schematic scheme of a communication via one and two TCWs is illustrated.

In figure 7a, an array of end user units EUU1 as well as an array of end user units EUU2 is illustrated. EUU1 comprises end user units like a stationary telephone ST, a mobile telephone MT, a personal computer PC and a UMTS device UMTS. The user 1 calls with the stationary telephone the TCW. The TCW recognizes the request to be connected to the user EUU2. Thus, the TCW establishes the connection to the PC as end user unit of user 2. The PC as end user unit EUU2 responds via the TCW to the stationary telephone as EUU1.

In figure 7b, the user 1 uses the stationary telephone ST as end user unit EUU1. In step capital A, ST contacts the TCW2. The TCW2 recognizes the request to contact user 2 and connects in step B user 1 to the PC as the end user unit EUU2. In response, the PC contacts TCW2 in step C. TCW now contacts TCW1 in step D. TCW1 is associated to the specific entity of user 1 using the end user unit EUU1. Since both TCWs use the same protocol, the TCW1 shares the information with TCW2, which end user units EUU1 are available. Thus, the connection may now be established according to step E1 to the stationary telephone ST, according to step E2 to the mobile telephone MT, according to step E3 to the personal computer PC or according to step E4 to the UMTS as end user unit EUU1 of user 1. This information is available because the two TCWs TCW1 and TCW2 share the information of the associated end user units with each other. Thus, the communication can integrate different end user units on both sides.

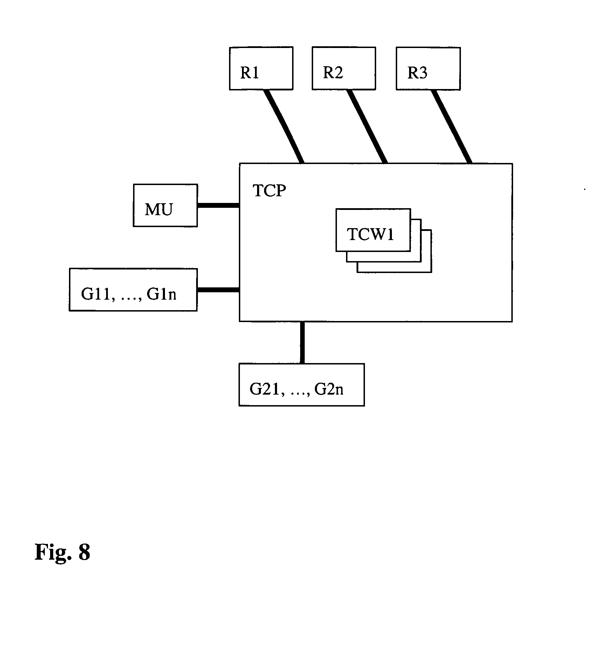

For providing the telecommunications web site TCW, a portal P shown in **figure 8** can be operated which serves as a physical location whereon the telecommunications web site TCW resides. This allows for an enhanced communications rate or speed since data/information to be communicated are not required to be transmitted between separated or even remote locations. Rather, all communications are exchanged through the telecommunications web site TCW like passing a window. Further, the portal P is responsible to provide the telecommunications web site TCW in a manner compatible to the first end user unit EUU1 and the specific entity SE actually used. In addition, the portal P can control the compliance with definitions of the telecommunications web site TCW e.g., on the basis of a memory unit MU associated to the portal P and the telecommunications web sites TCWs residing thereon, respectively, and including telecommunications web site definitions. Also, the portal P can communicate with the gateways G11,... , G1n and G21, ..., G2n to route communications links to the first end user unit EUU1 and the specific entity SE in dependence of its types and/or respective definitions for the telecommunications web site TCW.

Further, the portal P has different resources R1, R2 and R3. R1 is a content managing system in which news contents, calendar functions, entertainment services and other content services of a portal P are provided. The resource R2 is a special high-speed gateway to the PSTN. The resource R3 is an optical fibre connection to three other portals (not shown in the figure). Thus, the telecommunication web site TCW may use all resources R1 to R3, the memory unit MU and the gateways 1 and 2 provided by the portal. In addition, all other telecommunication web sites residing on this portal are able to use these resources. All the communication web sites of this portal P are residing on the same server. Thus, communication between these telecommunication web sites on this portal P is very fast and enhanced since the speed of communication between these web sites and the speed with which data exchange can take place is extraordinary high. MP3 data files, picture files, text files and other data may be exchanged between the specific entities of the different telecommunication web sites on this portal P very quickly. Further, the telecommunication web sites on this portal P communicate with a common protocol. Thus, they share certain information of the specific entities of these telecommunication web sites automatically. New data entries of the specific entity in its telecommunication web site are exchanged automatically. For instance, the new address of a specific entity amended in its own telecommunication web site will be communicated to all other telecommunication web sites in this portal on accessing these web sites. Thus, communication between the telecommunication web sites of the same portal P is enhanced.

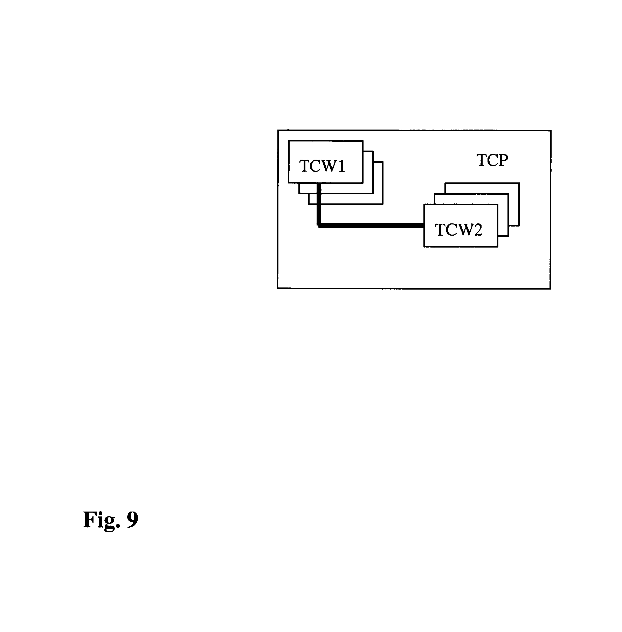

In **figure 9** the communication between two web pages TCW1 and TCW2 on the same portal TCP is illustrated. In this portal TCP, the telecommunication web site TCW1 is connected to the TCW2 by an optical fibre. Thus, the TCW1 may communicate with TCW2 much faster than two other telecommunication web sites not residing on the same portal TCP. These other communication web sites may have to use the internet or a PSTN network to communicate. Thus, a two telecommunication web sites TCW1 and TCW2 residing on the same portal TCP may communicate in a much enhanced way.

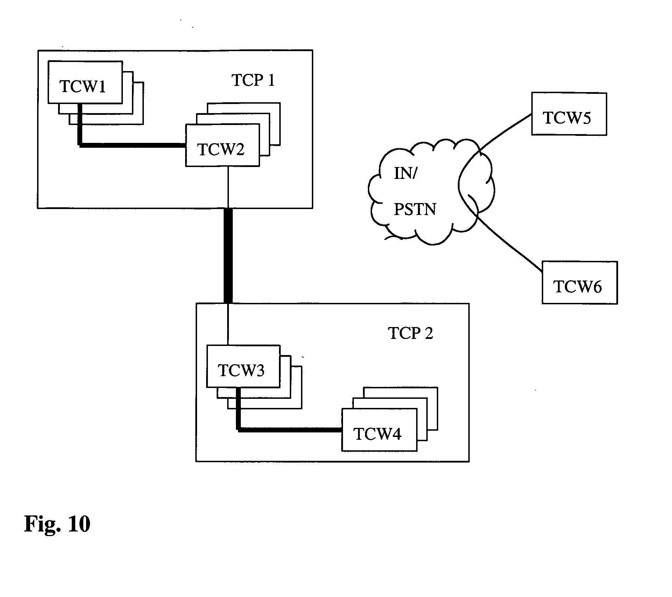

In **figure 10** two portals TCP1 and TCP2 are illustrated. The telecommunication portal TCP1 has the telecommunication web sites TCW1 and TCW2. The telecommunication portal 2 has telecommunication web sites TCW3 and TCW4. Both portals TCP1 and TCP2 are connected by a high-speed link. This high-speed link enables the two portals TCP1 and TCP2 to communicate in a very privileged and fast way. TCP1 and TCP2 use the same protocol chosen from a common list of protocols with which also the information of the telecommunication web sites residing on each of the portals TCP1 and TCP2 is exchanged. Thus, TCW2 connecting to TCW3 knows from the data exchange according to the protocol between the telecommunication portal TCP1 and TCP2 all necessary information of the specific entity associated to TCW3 automatically. This information is shared according to the common protocol between the communication portals TCP1 and TCP2. Thus, not only the communication between TCW1 and TCW2 is priviliged because residing on the same portal TCP1. Further, also the communication between the telecommunication web site TCW2 and TCW3 is priviliged since they are both supported by the common protocols used by the telecommunication portal TCP1 and TCP2. Thus, the communication between TCW2 and TCW3 is more advanced, faster and more priviliged than for instance the communication between a telecommunication web site TCW5 with a TCW6 via the internet IN or a PSTN network PSTN, also illustrated in figure 10.

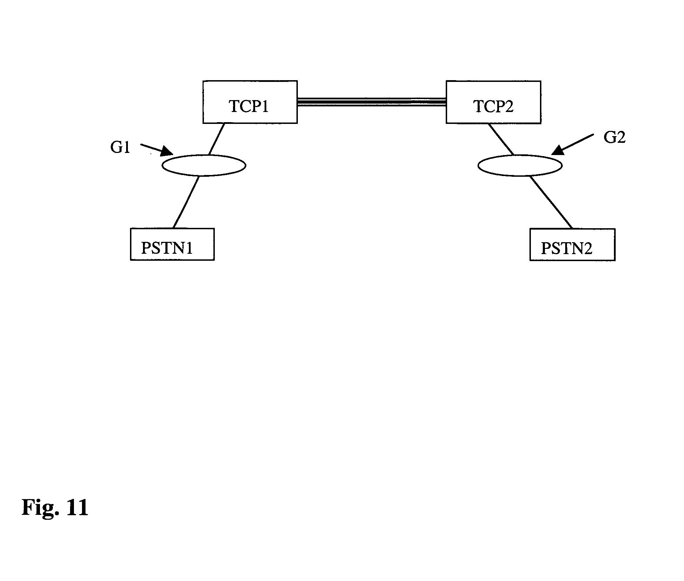

In **figure 11,** two portals TCP1 and TCP2 are connected by a high-speed linkage. Both portals TCP1 and TCP2 are communicating according to a common protocol. This linkage allows for synchronous communication. This means, that the communication has no delay that would cause a human being to be irritated. Thus, a human being may be able to communicate by voice via the linkage between the telecommunication portal TCP1 and TCP2 because there is no delay in the data information of the voice transmitted from TCP1 to TCP2 and vice versa. As a result, the user 1 using a device in the PSTN network PSTN1 may access a telecommunication portal TCP1 via a gateway G1 and request for a connection to user 2 using a device within the PSTN network PSTN2. This PSTN-network PSTN2 is connected to the telecommunication portal TCP2 via a gateway G2. Since both telecommunication portals TCP1 and TCP2 are connected to each other with this high-speed link, the user 1 may now communicate with the user 2 in the PSTN-network PSTN2 in a real time manner without delays in the transmittal of the voice. Keeping in mind, that the telecommunication portal TCP1 may be provided on a first continent and the telecommunication portal TCP2 may be provided on a different continent, two users may be connected by their access to the telecommunication portals via the gateway in a very handy manner. User 1 may contact its telecommunication portal TCP1 initiating a local call via the gateway G1. the same may true for the user 2 using PSTN2 to access the telecommunication portal TCP2. Thus, the users of the local PSTN-networks may only pay for accessing the respective portals TCP1 or TCP2, respectively. However, they do not have to pay for the connection between TCP1 and TCP2. Thus, both users U1 and U2 using the PSTN-networks PC1 and PSTN2 may be connected from continent to continent both only having to pay for their local calls. Thus, a very cost effective communication with a high quality of service is established.

## Claims

1. A communications environment, comprising:
a first end user unit (EUU1) being adapted to perform network-based communications, and
a web site including at least one web page, wherein
the web site is a telecommunications web site (TCW) corresponding to a specific entity (SE), and
the telecommunications web site (TCW) is adapted to provide, upon an access by the first end user unit (EUU1), for direct private communications between the first end user unit (EUU1) and the specific entity (SE),
including
a connection means (CM) for establishing a communications link from the first end user unit (EUU1) to the specific entity (SE) of the telecommunications web site (TCW).

2. Communications environment according to Claim 1,
**characterized in that** the connection means (CM) is controlled by the telecommunications web site (TCW).

3. Communications environment according to any of Claims 1 or 2,
**characterized in that** the connection means (CM) is a converter, an adapter, an IP-switch, an ATM-switch, a mechanical or electro-mechanical switching board, a protocol translator, a gateway, especially a telephone network gateway, a UMTS/ G3 network gateway, a computer network gateway, a television network gateway, a cable network gateway and/ or an Internet gateway or a combination of these components.

4. The communications environment according to one of the preceding Claims, including
a network including at least one of a telephone network, a computer network and/ or the Internet for performing at least one of the network-based communications and the direct private communications.

5. A telecommunications web site (TCW), comprising:
at least one web page, wherein
the web site is a telecommunications web site (TCW) corresponding to a specific entity (SE), and
the telecommunications web site (TCW) is adapted to provide, upon an access by a first end user unit (EUU1), for direct private communications between the end user unit (EUU1) and the specific entity (SE),
having a connection means (CM) for establishing a communications link from the first end user unit (EUU1) to the specific entity (SE) of the telecommunications web site (TCW).

6. The telecommunications web site (TCW) according to Claim 5,
**characterized in that** the connection means (CM) is controlled by the telecommunications web site (TCW).

7. The telecommunications web site (TCW) according to one of the Claims 5 to 6,
**characterized in that** the connection means (CM) is a converter, an adapter, an IP-switch, an ATM-switch, a protocol translator, a gateway, especially a telephone network gateway, a computer network gateway and/ or an Internet gateway.or a combination of these components.

8. A method for providing communications, including the steps of:
providing a web site including at least one web page corresponding to a specific entity (SE) and being adapted to provide direct private communications ,
accessing the telecommunications web site (TCW) by a first end user unit (EUU1), and
providing, in response to the accessing the telecommunications web site (TCW) by the first end user unit (EUU1), direct private communications between the first end user unit (EUU1) and the specific entity (SE),
establishing a communications link by means of a connection means (CM) from the first end user unit (EUU1) to the specific entity (SE) via the telecommunications web site (TCW).

9. A computer program product, including
program code portions for carrying out the steps according to Claim 8.

10. The computer program product, being
stored on a computer readable storage medium or in a computer readable memory unit.

11. An end user unit (EUUi), being adapted for at least one of:
being used in the communications environment according to one of the Claims 1 to 4,
being used with the telecommunications web site (TCW) according to one of the Claims 5 to 7,
being at least partially operated according to the steps of Claim 8 and/ or
being at least partially operated by means of the computer program product according to Claim 9 or 10.
